# EUROPEAN PATENT SPECIFICATION

(11) **EP 3 057 404 B1**
(45) Date of publication and mention of the grant of the patent: **06.12.2017**
(21) Application number: 14784463.3
(22) Date of filing: 15.10.2014
(51) Int. Cl.: A01D 34/81

(54) **NOISELESS TRACTOR MOWER**
GERÄUSCHARMER AUFSITZMÄHER
TONDEUSE AUTOPORTÉE SANS BRUIT

(30) Priority: 17.10.2013 IT MI20131728
(43) Date of publication of application: 24.08.2016
(73) Proprietor: Stiga S.p.A. in breve anche St. S.p.A., 31033 Castelfranco Veneto (TV) (IT)
(72) Inventor: HIPPOLITI, Raimondo, I-50053 Empoli Fi (IT)
(74) Representative: Mittler, Andrea
(86) International application number: PCT/EP2014/072132
(87) International publication number: WO 2015/055724

(56) References cited:
- EP-A1- 2 119 337
- US-A1- 2009 241 501

## Description

The present invention relates to a noiseless tractor mower.

Some tractor mowers, described for example in US7823873B1, US5894717 and US2009/0241501A1, comprise a frame to which a motor and a cutting housing are mounted, which is located in the middle of the tractor between the front and the rear portion.

Said cutting housing has a horizontal upper wall and a side wall, which hangs downward from an outer periphery of the upper wall.

The cutting housing is completely open downward and, inside the side wall, comprises vertical walls, different from the side wall, which form an eight-shaped profile chamber with two cavities intercommunicating with each other.

Each of said two cavities of the cutting housing are volute-shaped and a cutting blade is rotationally mounted within each one by means of a respective vertical hub which identifies a vertical axis. The two vertical axes of the cutting blades are arranged one more forward than the other with reference to a longitudinal axis of the tractor so as to lay on an axis which forms an angle with respect to said longitudinal axis of the tractor.

An appropriately arranged belt-pulley system makes it possible for the two blades to counter-rotate.

The vertical walls of the cutting housing of US5894717 allow to keep the cut grass for a long time inside to allow a finer shredding, named "mulching".

US7823873B1 further includes a sliding vertical wall which allows to open or close the profile of the cavities thereof so as to switch the grass cutting mode.

The cutting blades of US5894717 and of US7823873B1 have a particular geometry with flaps at their ends.

Said flaps of the cutting blades oppose a surface thereof to the rotary movement causing a very intense airflow within the respective cavities of the cutting housing.

The intense airflow created by the blades with rotating flaps allows to lift the cut grass and to direct the cut material at high speed towards a rear opening which is located over the rear portion of the tractor. The prior art apparently suggests that the cut grass must be conveyed at high speed out of the cutting housing chamber to prevent obstructing it.

The rear opening may be connected to a tunnel, at the end of which, external to the tractor, a stone guard is placed which stops the cut material at high speed and sends it towards the ground, or said opening may be connected to a rear bag for collecting the cut grass, as described in EP2119337A1.

Like the rear opening, the opening may be on the side in other tractor mowers. In the case of said upper side opening, the airflow generated in the cavities of the cutting housing by the rotating blades with the flaps, lifts the cut material and sends it at high speed towards a side tunnel with a stone guard, similar to the one described for the rear opening, which sends the cut material towards the ground and to the side of the tractor.

Said tractor mowers of the prior art are very expensive in terms of production cost and maintenance cost for the user because the fuel consumption of the motor is disadvantageously high. By analyzing the power drawn by these tractor mowers, it results that only approximately 20% of the motor power is used to move the tractor. Disadvantageously, approximately 80% of the power of the motor is used to cut the grass.

Furthermore, tractor mowers produce a disadvantageously very loud noise, to the extent that users must employ particular ear protections. It does not appear possible to any person skilled in art to significantly reduce the noise of tractor mowers while maintaining excellent grass cutting.

It is the object of the present invention to make a less costly tractor mower which allows to cut the grass in optimal manner with very low fuel consumption and a very high reduction of noise of the tractor.

In accordance with the invention, such objects are reached by a tractor mower comprising a frame which mounts a motor and a cutting housing, said cutting housing comprises an upper wall, a side wall which hangs downward from an outer periphery of the upper wall and a cutting chamber open downward comprising a left side cavity with left side circular base and a right side cavity with right side circular base intercommunicating with each other, said left side circular base and right side circular base define a base profile on a horizontal cutting plane of the cutting blades, said cutting blades being two, each of said two cutting blades being rotatably mounted by means of a left side vertical hub with the left side cavity and by means of a right side vertical hub with the right side cavity, said left side vertical hub defining a left side vertical axis and said right side vertical hub defining a right side vertical axis, the left side vertical axis arranged in a position shifted towards a front portion of the tractor mower with respect to the right side vertical axis arranged in a position shifted to a rear portion of the tractor mower, so that a horizontal line joining the left side vertical hub and the right side vertical hub identifies an axis which forms an angle with respect to a longitudinal axis of the tractor mower, characterized in that said cutting housing is closed by the upper wall, by the side wall and is partially closed downwards by a horizontal lower wall disposed on the horizontal cutting plane of the cutting blades, said lower wall opens downwards only in correspondence of the cutting chamber, the base profile being horizontal on the cutting plane of the cutting chamber opened downwards, the base profile being outlined by an intersection between the side wall and the lower wall, said base profile of the cutting chamber is shaped as a rounded eight with a front connecting portion in the sense of the front portion of the tractor mower and with a rear connecting portion in the sense of the rear portion of the tractor mower, said connecting portions being such that the base profile of the cutting chamber changes gradually curvature from a portion of a left side circular base to a portion of a right side circular base, in such a way that an airflow generated by the cutting blades during rotation is as laminar and regular as possible inside the cutting chamber, said cutting chamber comprising an upper central cavity intercommunicating with the left side cavity and the right side cavity, said upper central cavity being suitable for allowing an exchange of air between interior and exterior of the cutting chamber.

These and other features of the present invention will be more apparent from the following detailed description of a practical embodiment thereof, shown by way of non-limitative example in the accompanying drawings, in which:
Figure 1 shows a view from the top of a tractor mower;
Figure 2 shows a section view taken along line II-II in figure 1;
Figure 3 shows a rear view of the tractor mower;
Figure 4 shows a view from the bottom of the tractor mower;
Figure 5 shows a view from the top of a cutting housing of the tractor mower;
Figure 6 shows a view from the bottom of the cutting housing;
Figure 7 shows a rear view of the cutting housing;
Figure 8 shows a front view of the cutting housing;
Figure 9 shows a section view taken along line IX-IX in Figure 5;
Figure 10 shows a section view taken along line X-X in Figure 5;
Figure 11 shows a view from the top of a cutting blade;
Figure 12 shows a side view of the cutting blade.

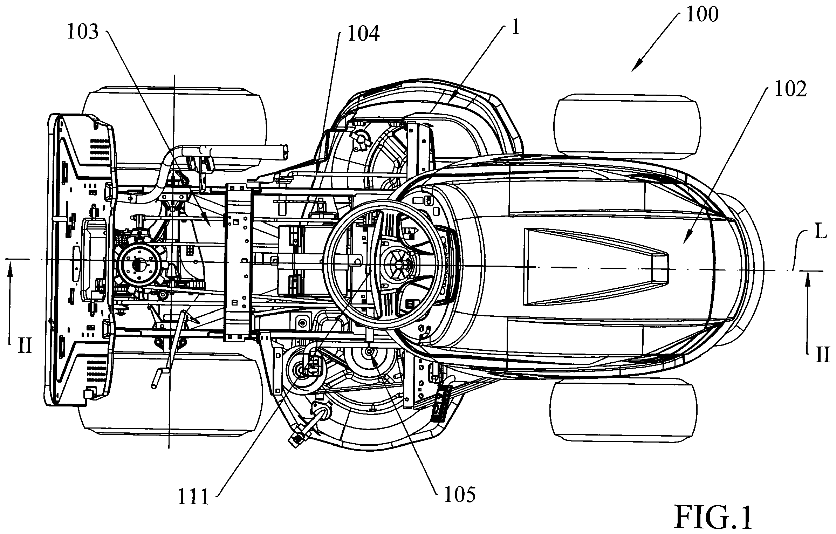

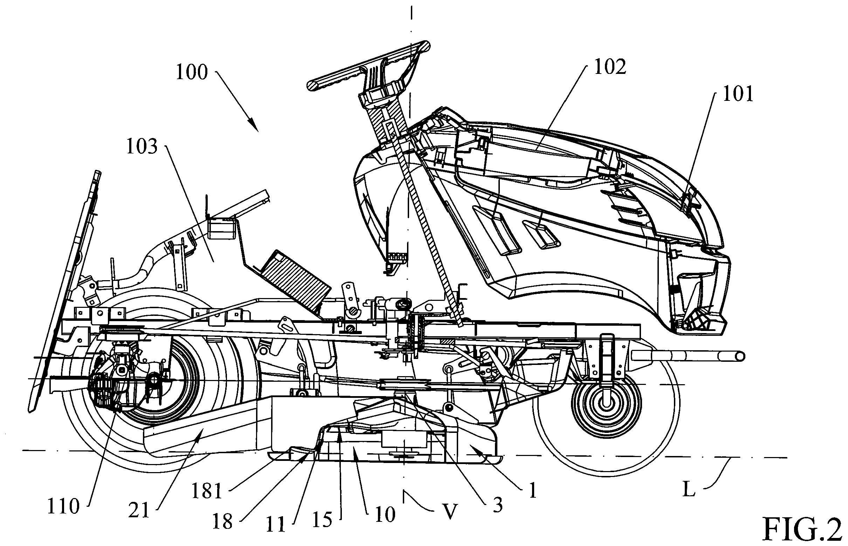

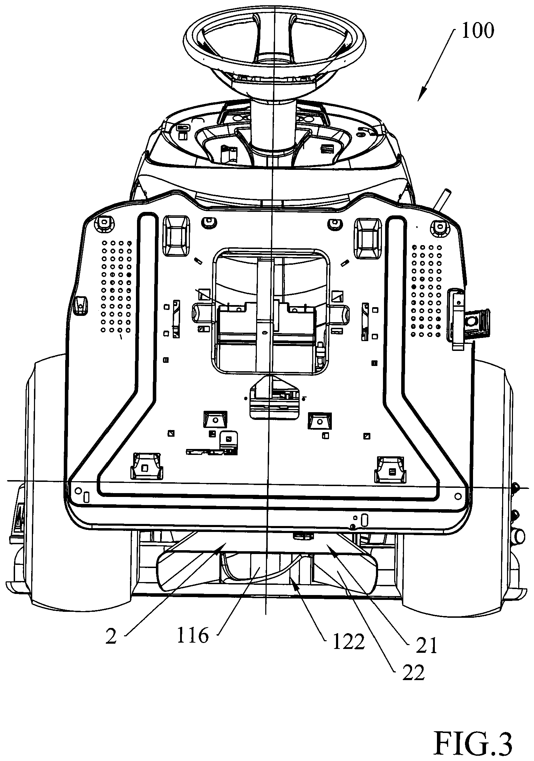

The aforesaid figures, in particular Figures 1-3, show a tractor mower 100 comprising a frame 101 which mounts a motor 110 and a cutting housing 1, the center of which is located in the center 111 of the tractor 100 between a front portion 102 and a rear portion 103 of the tractor 100 itself. A longitudinal axis L of the tractor 100 passes through the center 111 of the tractor 100 between a left portion 104 and a right portion 105 of the tractor 100.

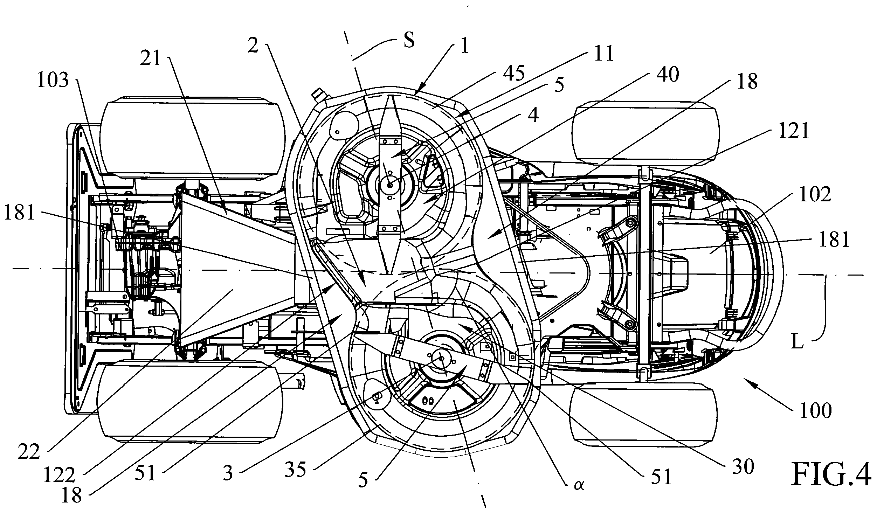

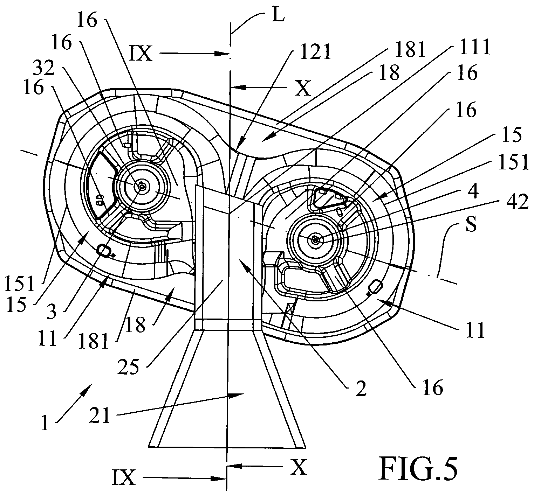

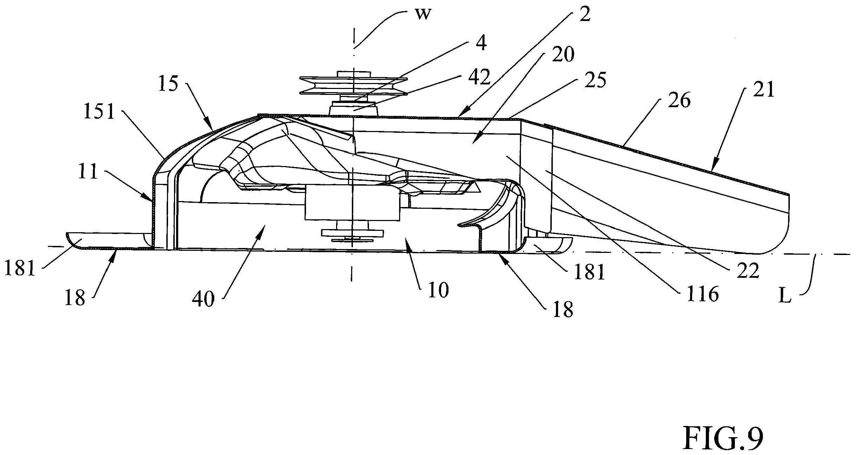

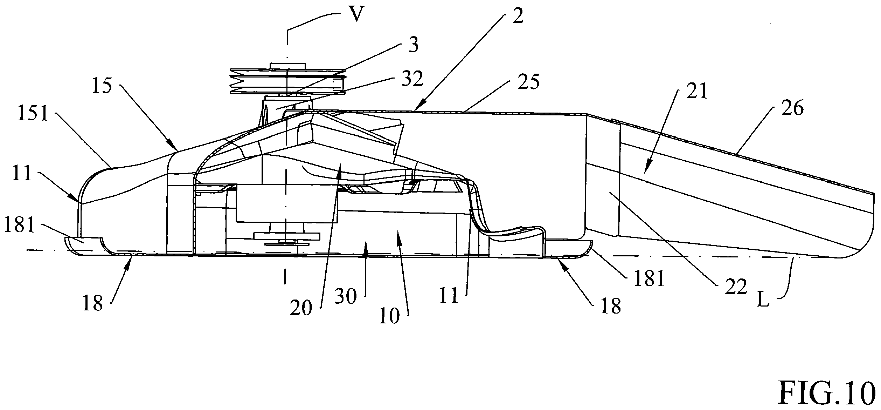

As shown in particular in Figures 4-10, said cutting housing 1 has an upper wall 15 and a side wall 11 which hangs downward from an outer periphery 151 of the upper wall 15.

The cutting housing 1 is partially closed downwards from a horizontal lower wall 18 arranged on a horizontal cutting plane of cutting blades 5, which are rotatably mounted on said cutting housing 1.

Said lower wall 18 opens downwards only at a cutting chamber 10 which contains the cutting blades 5 for cutting the grass.

The lower wall 18 has a flanged outer periphery 181 which is lifted upwards and adapted to bend the grass in a direction of movement of the tractor 100 before it passes over it to cut it.

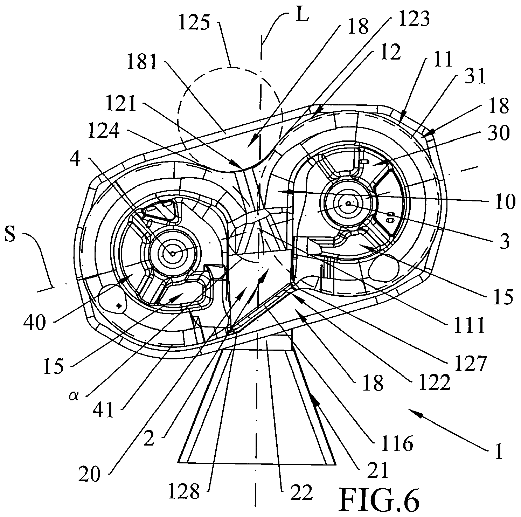

An intersection between the side wall 11 and the lower wall 18 outlines a base profile 12 which is horizontal to the cutting chamber 10 on the horizontal cutting plane, as shown in Figures 4 and 6.

Said chamber 10 is thus enclosed between the side wall 11 and the upper wall 15, while the horizontal base of the chamber 10 is open downward and has a shape defined by the base profile 12.

The closing of the cutting housing 1 by means of the lower wall 18, the side wall 11 and the upper wall 15 contributes to keeping the cut grass within the chamber 10 for a longer time, thus in manner contrary to that described in the prior art which instead asserts the technical prejudice of transporting the cut grass out from the cutting chamber as quickly as possible.

Said chamber 10 comprises a left side cavity 30, a right side cavity 40 and a upper central cavity 20 which are intercommunicating with one another.

Cavities 30 and 40 have horizontal bases open downward and arranged on the cutting plane. The left side cavity 30 has a left side circular base 31, while the right side cavity 40 has a right side circular base 41. The left side circular base 31 and the right side circular base 40 are tangent at a point of the cutting plane which corresponds to the center 111 of the tractor 100, which corresponds, in turn, to the center 111 of the cutting plane 1.

Thus, as shown in particular in Figure 6, the base profile 12 of the chamber 10 is shaped as an eight on the horizontal cutting plane, because the base profile 12 follows a curvilinear portion of the two circular bases 31 and 41.

The eight-shape of the base profile 12 is rounded towards both the front and the rear of the tractor 100, so that the base profile 12 has two connecting portions between the two circular bases 31 and 41 of said two cavities 30 and 40.

Said two connecting portions are a curved front connecting portion 121 and a linear rear connecting portion 122 so that the base profile 12 of the chamber 10 gradually changes the curvature of the left side circular base 31 to the portion of the right side circular base 41. The gradual change of curvature of the profile 12 obtained by means of the two connecting portions 121 and 122, contribute to obtain an airflow as laminar and regular as possible in the chamber 10, so that the airflow has the lowest intensity and lowest speed possible.

The curved front connecting portion 121 has a left side frontal flex portion 123 and a right side frontal flex portion 124.

The left side frontal flex portion 123 allows the profile 12 to change curvature gradually passing from following the curvature of the left side circular base 31 to following the curvature of a virtual circumference 125 with radius exterior to the chamber 10 and tangent to both the left side circular base 31 and to the right side circular base 41.

The right side frontal flex portion 124 allows the base profile 12 to change curvature gradually passing from following the curvature of the base portion of the right side circular base 41 to following the curvature of the virtual circumference 125.

The linear rear connecting portion 122 comprises a left side rear flex portion 127 and a right side rear flex portion 128.

The left side rear flex portion 127 allows the profile 12 to change curvature gradually passing from following the curvature of the portion of the left side circular base 31 to following the linear rear connecting portion 122.

The right side rear flex portion 128 allows the profile 12 to change curvature gradually passing from following the curvature of the portion of the right side circular base 41 to following the linear rear connecting portion 122.

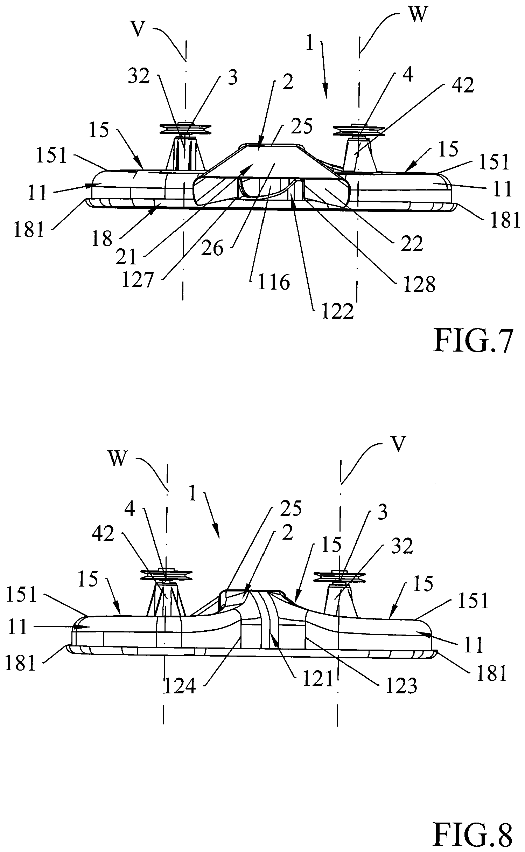

As shown in Figure 7, the side wall 11, in correspondence of said linear rear connecting portion 122 of the profile 12, has an opening 116 which makes the interior of the chamber 10 communicate with the exterior, allowing the exchange of air during the movement of the cutting blades 5.

As shown in Figures 4-10, at the center of the tractor 100 and over the tangent point between the left side circular base 31 and the right side circular base 41 of the cavities 30 and 40, said upper wall 15 has a bulge raising upwardly relative to the level of the upper wall 15 which is over the cavities 30 and 40. Said upwardly raising bulge of the upper wall 15 is shaped as a tunnel 2.

An inner surface of the tunnel 2 identifies said upper central cavity 20 of the chamber 10, which allows an air exchange between interior and the exterior of the chamber 10.

Said tunnel 2 is arranged along the direction of the longitudinal axis L of the tractor 100. The tunnel 2 has a horizontal flat upper surface 25 which is at the same height as the plane. Said upper surface 25 of the tunnel departs from the center of the tractor 100 and continues in direction of the longitudinal axis L towards the rear portion 103 of the tractor 100.

Height variations of the upper wall 15 and changes of curvature of the tunnel 2 occur gradually so as to contribute to allowing airflows as laminar and regular as possible inside the chamber 10, so that the intensity and speed of the airflow is as low as possible.

The tunnel 2 widens into a funnel-shaped stone guard 21 in correspondence of the flanged edge 181 of the lower wall 18. Said stone guard 21 comprises an upper surface 26 of the stone guard 21 which hangs downward towards the cutting plane, so as to stop any fragments which are cut by the cutting blade 5. The opening 22 of the stone guard 21 is at the opening 116 of the central wall 11 so as to allow both an air exchange between interior and exterior of the chamber 10, and to allow possible fragments or obstacles, e.g. stones or sticks intercepted by the cutting blades 5, to exit outwards towards the exterior of the chamber 10.

Over the two cavities 30 and 40, the upper wall 15 has two vertical guides 32 and 42 with guiding through hole at the geometric centers of the two circular bases 31 and 41 of the two cavities 30, 40.

The upper wall 15 over each of said two cavities 30 and 40 comprises three upper bulges 16 reciprocally arranged at 120°. Each of said upper bulges 16 is arranged in radial sense starting from the center of the respective vertical guide 32, 42 and outwards. Said upper bulges 16 are used to reinforce the structure of the cutting housing 1 to prevent stones or sticks or other obstacles encountered by the cutting blades 5 and diverted towards the internal surfaces of the chamber 10 from deforming the shape itself of the chamber 10 by impacting against it.

Each of said two vertical guides 32 and 42 rotatably mounts a respective left side vertical hub 3 and right side vertical hub 4 which identifies a respective left side vertical axis V and right side vertical axis W, as shown in Figures 7-10.

Each of said two hubs 3 and 4 mount the cutting blade 5 which is symmetric and lays horizontally on the cutting plane of the cutting housing 1.

The two vertical axes V, W of the cutting blades 5 are arranged the left side one V in a position shifted towards the front portion 102 of the tractor 100 with respect to the right side one W, which is instead more shifted towards the rear portion 103 of the tractor, so that the line joining the left side vertical hub 3 and the right side vertical hub 4 identifies an axis S which forms an angle α with respect to said longitudinal axis L of the tractor 100.

Said angle α is comprised between 0° and 90° so that during a movement along a straight line of the tractor 100, the left side cavity 30 encounters the grass to be cut before the right side cavity 40 of the cutting housing 1.

As shown in Figure 4, the left side blade is advantageously counterrotating with respect to the right side blade 5 to preserve the angular moment of the tractor 100.

A belt-pulley system permits the counter-rotation of the two blades 5.

During the rotation of the blades 5 about the respective vertical axes V and W, two ends 51 of each of said cutting blades 5 identify a respective circular locus of points 35, 45 which is kept inside the respective cavity 30, 40 and identifies a horizontal geometric cutting surface of the cutting housing 1.

Although the two loci of points 45 of the two blades 5 are on the same horizontal plane, the locus of points 35 of the cutting blade 5 of the left side cavity 30 does not intersect the respective locus of points of the other cutting blade 5 of the right side cavity 40 of the chamber 10 of the cutting housing 1, thus advantageously allowing the two blades 5 to rotate independently from each other.

Although the two loci of points 35 and 45 do not intersect, all the grass on the cutting plane of the cutting housing 1 is cut by virtue of the fact that the axis S has an angle α with respect to said longitudinal axis L of the tractor 100.

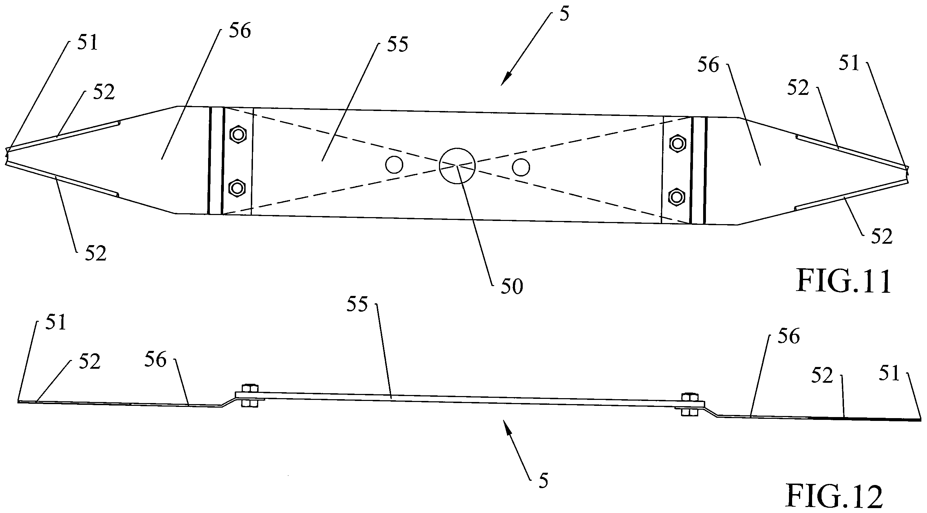

As shown in Figures 11 and 12, the cutting blade 5 is symmetric and flat on the horizontal cutting plane. Said cutting blade 5 has rectangular shaped mounting base 55. In the center of the mounting base 55 identified by two diagonals shown in Figure 11, there is a mounting hole 50 for the respective vertical hub 3, 4. Tip-shaped elements 56, which end in pointed extremities 51 of the cutting blade 5, are mounted on both the short ends of the rectangle of the mounting base 55. The tip-shaped elements 56 are also flat. On both sides of the tip-shaped elements 56 in direction of the rotation of the cutting blade 5 there are pointed blades 52 adapted to cut the grass.

The cutting blades 5 are as flat as possible on the horizontal cutting plane advantageously to promote a low speed, low intensity airflow so that the cut grass remains in the cutting zone and falls onto the ground by gravity immediately after having been cut by the cutting blades 5.

Said low speed, low intensity airflow caused by the rotation of the cutting blades 5, does not create a strong airflow nor sends the cut material in any particular direction, contrary to what occurs in the documents of the prior art, which attempt to convey the cut material towards a collection bag or in all cases outside the chamber 10 at high speed.

Incredibly and surprisingly, said low speed, low intensity airflow reduces the noise of the tractor 100, going against the teachings of the prior art.

Incredibly and surprisingly, the low speed, low intensity airflow advantageously also allows to reduce the fuel consumption of the motor 110 by nearly 80%. The motor 110 is indeed used to move the tractor 100 and no longer to lift the cut grass or to turn the heavy cutting blades with high aerodynamic friction flaps which produce a strong airflow for conveying and sending the cut material out of the cutting chamber at high speed. By virtue of the present invention it is possible to use tractors 100 with much smaller, lighter, less expensive and low noise thermal motors 110, which allow to further reduce the noise of the tractor 100. Furthermore, smaller motors 110 can be mounted on lighter frames 101, which allow to further reduce production costs of the tractor 100 and fuel consumption.

The light-weight of the tractor 100, by virtue of the present invention, allows to consume even less, because the motor 110 does not need to consume most of its power to move a heavy tractor as the ones described in the prior art.

Said tractor 100 according to the present invention may fit an electric motor 110, even more advantageously, because it is smaller, even more cost-effective, requires less stored energy in the batteries and is even less noisy, making the tractor 100 ultra quiet and obtaining an incredible, surprising noise reduction of approximately 10 dBA.

With regards the operation of the tractor mower 100, it moves along the line of the soil on which to cut the grass. The flanged edges 181 of the lower wall 18 bend the blade of grass in direction of the movement of the tractor 100. Proceeding its course, the tractor 100 allows the grass bent by the lower wall 18 to enter into the cutting chamber 10 in which the cutting blades 5 cut the grass by turning about their respective vertical axis V and W.

The turning blades 5 create a low intensity, low speed airflow inside the chamber 10 such not to achieve to send the cut material in a precise direction, but scattering the cut material in all directions until it falls by gravity under the chamber 10.

A small part of the cut grass also ends up in the upper central cavity 20 and then exits through the opening 116 in the side wall 11 and the opening 22 of the stone guard 21 settling on the ground underneath the upper surface 26 of the stone guard 21.

Alternatively, the tunnel 2 may be oriented along other directions, e.g. sideways, thus starting from the center 111 of the cutting housing 1 and being directed towards the exterior of the cutting chamber 10.

Advantageously, the interior shape of the chamber 10 allows not to create turbulence in the airflow generated by the cutting blades 5, which airflow remains as laminar, low speed and low intensity as possible to reduce the noise of the tractor 100 and reduce the fuel consumption of the motor 110 of the tractor 100 advantageously.

## Claims

1. Tractor mower (100) comprising a frame (101) that mounts a motor (110) and a cutting housing (1), said cutting housing (1) comprises an upper wall (15), a side wall (11) that hangs downward from an outer periphery (151) of the upper wall (15) and a cutting chamber (10) is open downward comprising a left side cavity (30) with left side circular base (31) and a right side cavity (40) with right side circular base (41) intercommunicating with each other, said left side circular base (31) and right side circular base (41) define a base profile (12) on a horizontal cutting plane of the cutting blades (5), said cutting blades (5) being two, each of said two cutting blades (5) being rotatably mounted by means of a left side vertical hub (3) with the left side cavity (30) and by means of a right side vertical hub (4) with the right side cavity (40), said left side vertical hub (3) defining a left side vertical axis (V) and said right side vertical hub (4) defining a right side vertical axis (W), the left side vertical axis (V) arranged in a position shifted towards a front portion (102) of the tractor mower (100) with respect to the right side vertical axis (W) arranged in a position shifted to a rear portion (103) of the tractor mower (100), so that a horizontal line joining the left side vertical hub (3) and the right side vertical hub (4) identifies an axis (S) that forms an angle (α) with respect to a longitudinal axis (L) of the tractor mower (100), **characterized in that** said cutting housing (1) is closed by the upper wall (15), by the side wall (11) and is partially closed downwards by a horizontal lower wall (18) disposed on the horizontal cutting plane of the cutting blades (5), said lower wall (18) opens downwards only in correspondence of the cutting chamber (10), the base profile (12) being horizontal on the cutting plane of the cutting chamber (10) opened downwards, the base profile (12) being outlined by an intersection between the side wall (11) and the lower wall (18), said base profile (12) of the cutting chamber (10) is shaped as a rounded eight with a front connecting portion (121) in the sense of the front portion (102) of the tractor mower (100) and with a rear connecting portion (122) in the sense of the rear portion (103) of the tractor mower (100), said connecting portions (121, 122) being such that the base profile (12) of the cutting chamber (10) changes gradually curvature from a portion of a left side circular base (31) to a portion of a right side circular base (41), in such a way that an airflow generated by the cutting blades (5) during rotation is as laminar and regular as possible inside the cutting chamber (10), said cutting chamber (10) comprising an upper central cavity (20) intercommunicating with the left side cavity (30) and the right side cavity (40), said upper central cavity (20) being suitable for allowing an exchange of air between inside and outside of the cutting chamber (10) through an opening (116) of the side wall (11) making the interior of the cutting chamber (10) communicate with the exterior.

2. Tractor mower (100) according to claim 1, **characterized in that** each of said cutting blades (5) is symmetrical and flat over the horizontal cutting plane, such that the airflow is of low speed and is of low intensity inside the cutting chamber (10).

3. Tractor mower (100) according to claims 1 or 2, **characterized in that** said cutting blade (5) comprises a mounting base (55) of flat rectangular shape, on both short sides of the mounting base (55) are mounted tip-shaped flat elements (56) which end in pointed extremities (51), on both sides of each of said tip-shaped flat elements (56) there are pointed blades (52) in the direction of rotation of the cutting blade (5) adapted to cut the grass.

4. Tractor mower (100) according to any of the preceding claims, **characterized in that** said front connecting portion (121) is curved and said rear connecting portion (122) is linear, the curve front connecting portion (121) comprises a left side frontal flex portion (123) and a right side frontal flex portion (124), the left side frontal flex portion (123) allows the base profile (12) to change gradually curvature passing from following the curvature of the portion of the left side circular base (31) to following the curvature of a virtual circumference (125) with a radius exterior to the cutting chamber (10) and tangent to both the left side circular base (31) and the right side circular base (41), the right side frontal flex portion (124) allows the base profile (12) to change gradually curvature passing from following the curvature of the portion of the right side circular base (41) to following the curvature of the virtual circumference (125), the linear rear connecting portion (122) comprises a left side rear flex portion (127) and a right side rear flex portion (128), the left side rear flex portion (127) allows the base profile (12) to change gradually curvature passing from following the curvature of the portion of the left side circular base (31) to following the linear rear connecting portion (122), the right side rear flex portion (128) allows the base profile (12) to change gradually curvature passing from following the curvature of the portion of the right side circular base (41) to following the linear rear connecting portion (122).

5. Tractor mower (100) according to any of the preceding claims, **characterized in that** said upper wall (15) has a bulge raising upwardly relative to a level of the upper wall (15) which is above the left side cavity (30) and the right side cavity (40), said bulge raising upwardly of the upper wall (15) having a shape of a tunnel (2), said upper central cavity (20) of the cutting chamber (10) is detected from an inner surface of said tunnel (2), variations in the height of the upper wall (15) and changes of the curvature of the tunnel (2) take place in a gradual manner.

6. Tractor mower (100) according to claim 5, **characterized in that** said tunnel (2) has an upper surface (25) which starts from a center of the upper wall (15) and directs towards the outside of the cutting chamber (10), said center of the upper wall (15) is corresponding to a center (111) of the cutting housing (1) identified over the horizontal cutting plane at a point of tangency between said left side circular base (31) of the left side cavity (30) and said right side circular base (411) of the right side cavity (40) of the cutting chamber (10).

7. Tractor mower (100) according to claim 6, **characterized in that** said tunnel (2) is flat and horizontal and keeps the same height with respect to the horizontal cutting plane from the center (111) of the cutting housing (1) in the direction of the longitudinal axis (L) towards the rear portion (103) of the tractor mower (100), said tunnel (2) widens in a funnel-shaped stone guard (21).

8. Tractor mower (100) according to claim 7, **characterized in that** the the opening (116) of the side wall (11) is in correspondence of said rear connecting portion (122) of the base profile (12), the stone guard (21) has an opening (22) which is in correspondence with the opening (116) of the side wall (11).

9. Tractor mower (100) according to any of the preceding claims, **characterized in that** the upper wall (15) includes three upper bulges (16) which are arranged at 120° between them and which are respectively over each of said left side cavity (30) and right side cavity (40), each of said three upper bulges (16) is arranged in the radial direction starting from the center (111) of the cutting housing (1) and continuing towards the outside, said upper bulges (16) adapted to reinforce the structure of the cutting housing (1) preventing the internal surfaces of the cutting chamber (10) can be deformed by collision with obstacles.

10. Tractor mower (100) according to any of the preceding claims, **characterized in that** said lower wall (18) comprises a flanged outer periphery (181) which is lifted upwards and is adapted to bend the grass in a direction of movement of the tractor mower (100).

## Patentansprüche

1. Mähtraktor (100), mit einem Rahmen (101), an dem ein Motor (110) und ein Schneidgehäuse (1) angebracht sind, wobei das Schneidgehäuse (1) eine obere Wand (15), eine Seitenwand (11), die sich von einem äußerer Rand (151) der oberen Wand (15) nach unten erstreckt, und eine Schneidkammer (10) aufweist, die nach unten offen ist und einen linken Hohlraum (30) mit einer linken kreisförmigen Basis (31) sowie einen rechten Hohlraum (40) mit einer rechten kreisförmigen Basis (41) aufweist, die miteinander in Verbindung stehen, wobei die linke kreisförmige Basis (31) und die rechte kreisförmige Basis (41) ein Basisprofil (12) in einer horizontalen Schneidebene der Schneidmesser (5) definieren, wobei die Anzahl der Schneidmesser (5) zwei beträgt und die beiden Schneidmesser (5) mittels einer linken vertikalen Nabe (3) in dem linken Hohlraum (30) bzw. mittels einer rechten vertikalen Nabe (4) in dem rechten Hohlraum (40) drehbar angebracht sind, wobei die linke vertikale Nabe (3) eine linke vertikale Achse (V) definiert und die rechte vertikale Nabe (4) eine rechte vertikale Achse (W) definiert, wobei die linke vertikale Achse (V) in einer zu einem vorderen Bereich (102) des Mähtraktors (100) verlagerten Position in Bezug auf die rechte vertikale Achse (W) angeordnet ist, die in einer zu einem hinteren Bereich (102) des Mähtraktors (100) verlagerten Position angeordnet ist, so dass eine horizontale Linie, die die linke vertikale Nabe (3) und die rechte vertikale Nabe (4) verbindet, eine Achse (S) bildet, die einen Winkel (α) in Bezug auf eine Längsachse (L) des Mähtraktors (100) bildet,
**dadurch gekennzeichnet, dass** das Schneidgehäuse (1) durch die obere Wand (15) und durch die Seitenwand (11) geschlossen ist sowie in Richtung nach unten durch eine horizontale untere Wand (18) partiell geschlossen ist, die in der horizontalen Schneidebene der Schneidmesser (5) angeordnet ist, wobei sich die untere Wand (18) nur in Entsprechung mit der Schneidkammer (10) nach unten öffnet, wobei das Basisprofil (12) in der Schneidebene der nach unten offenen Schneidkammer (10) horizontal ist, wobei das Basisprofil (12) durch einen Schnittpunkt zwischen der Seitenwand (11) und der unteren Wand (18) umrissen ist, wobei das Basisprofil (12) der Schneidkammer (10) als abgerundete Acht mit einem vorderen Verbindungsbereich (121) in Richtung des vorderen Bereichs (102) des Mähtraktors (100) und mit einem hinteren Verbindungsbereich (122) in Richtung des hinteren Bereichs (103) des Mähtraktors (100) ausgebildet ist, wobei die Verbindungsbereiche (121, 122) derart sind, dass das Basisprofil (12) der Schneidkammer (10) seine Krümmung von einem Bereich einer linken kreisförmigen Basis (31) zu einem Bereich einer rechten kreisförmigen Basis (41) allmählich derart ändert, dass ein durch die Schneidmesser (5) während der Rotation erzeugter Luftstrom im Inneren der Schneidkammer (10) so laminar und regelmäßig wie möglich ist, wobei die Schneidkammer (10) einen oberen zentralen Hohlraum (20) aufweist, der mit dem linken Hohlraum (30) und dem rechten Hohlraum (40) in Verbindung steht, wobei der obere zentrale Hohlraum (20) geeignet ist, einen Luftaustausch zwischen der Innenseite und der Außenseite der Schneidkammer (10) durch eine Öffnung (116) der Seitenwand (11) zu ermöglichen, wodurch das Innere der Schneidkammer (10) mit der Außenseite in Verbindung gebracht wird.

2. Mähtraktor (100) nach Anspruch 1,
**dadurch gekennzeichnet, dass** die Schneidmesser (5) jeweils symmetrisch und flach über der horizontalen Schneidebene angeordnet sind, so dass der Luftstrom eine geringe Geschwindigkeit hat und eine geringe Intensität im Inneren der Schneidkammer (10) aufweist.

3. Mähtraktor (100) nach Anspruch 1 oder 2,
**dadurch gekennzeichnet, dass** das Schneidmesser (5) eine Montagebasis (55) mit flacher rechteckiger Form aufweist, wobei an beiden kurzen Seiten der Montagebasis (55) spitz ausgebildete flache Elemente (56) angebracht sind, die in spitzen Enden (51) enden, und wobei auf beiden Seiten von jedem der spitz ausgebildeten flachen Elemente (56) spitze Klingen (52) in der Rotationsrichtung des Schneidmessers (5) vorhanden sind, die zum Schneiden von Gras ausgebildet sind.

4. Mähtraktor (100) nach einem der vorhergehenden Ansprüche,
**dadurch gekennzeichnet, dass** der vordere Verbindungsbereich (121) gekrümmt ist und der hintere Verbindungsbereich (122) linear ist, wobei der gekrümmte vordere Verbindungsbereich (121) einen linken vorderen Biegebereich (123) und einen rechten vorderen Biegebereich (124) aufweist, wobei der linke vordere Biegebereich (123) es dem Basisprofil (12) ermöglicht, seine Krümmmung von einem Verlauf, der der Krümmung des Bereichs der linken kreisförmigen Basis (31) folgt, allmählich in einen Verlauf zu ändern, der der Krümmung eines virtuellen Umfangs (125) mit einem Radius außerhalb der Schneidkammer (10) folgt und tangential sowohl zur linken kreisförmigen Basis (31) als auch zur rechten kreisförmigen Basis (41) ist, wobei der rechte vordere Biegebereich (124) es dem Basisprofil (12) ermöglicht, seine Krümmung von einem Verlauf, der der Krümmung des Bereichs der rechten kreisförmigen Basis (41) folgt, allmählich in einen Verlauf zu ändern, der der Krümmung des virtuellen Umfangs (125) folgt, wobei der lineare hintere Verbindungsbereich (122) einen linken hinteren Biegebereich (127) und einen rechten hinteren Biegebereich (128) aufweist, wobei der linke hintere Biegebereich (127) es dem Basisprofil (12) ermöglicht, seine Krümmung von einem Verlauf, der der Krümmung des Bereichs der linken kreisförmigen Basis (31) folgt, allmählich in einen Verlauf zu ändern, der dem linearen hinteren Verbindungsbereich (122) folgt, wobei der rechte hintere Biegebereich (128) es dem Basisprofil (12) ermöglicht, seine Krümmung von einem Verlauf, der der Krümmung des Bereichs der rechten kreisförmigen Basis (41) folgt, allmählich in einen Verlauf zu ändern, der dem linearen hinteren Verbindungsbereich (122) folgt.

5. Mähtraktor (100) nach einem der vorhergehenden Ansprüche,
**dadurch gekennzeichnet, dass** die obere Wand (15) eine Ausbuchtung aufweist, die relativ zu einem Niveau der oberen Wand (15) nach oben ansteigt, das über dem linken Hohlraum (30) und dem rechten Hohlraum (40) liegt, wobei die von der oberen Wand (15) nach oben ansteigende Ausbuchtung (20) die Form eines Tunnels (2) aufweist, wobei der obere zentrale Hohlraum (20) der Schneidkammer (10) von einer Innenfläche des Tunnels (2) ermittelt wird, wobei Veränderungen in der Höhe der oberen Wand (15) und Änderungen der Krümmung des Tunnels (2) allmählich stattfinden.

6. Mähtraktor (100) nach Anspruch 5,
**dadurch gekennzeichnet, dass** der Tunnel (2) eine obere Fläche (25) aufweist, die von einem Zentrum der oberen Wand (15) aus beginnt und zur Außenseite der Schneidkammer (10) verläuft, wobei das Zentrum der oberen Wand (15) einem Zentrum (111) des Schneidgehäuses (1) entspricht, das über der horizontalen Schneidebene an einem Tangentialpunkt zwischen der linken kreisförmigen Basis (31) des linken Hohlraums (30) und der rechtsseitigen kreisförmigen Basis (411) des rechten Hohlraums (40) der Schneidkammer (10) gebildet ist.

7. Mähtraktor (100) nach Anspruch 6,
**dadurch gekennzeichnet, dass** der Tunnel (2) flach und horizontal ist und in Bezug auf die horizontale Schneidebene von dem Zentrum (111) des Schneidgehäuses (1) in Richtung der Längsachse (L) in Richtung auf den hinteren Bereich (103) des Mähtraktors (100) die gleiche Höhe beibehält, wobei sich der Tunnel (2) in einen trichterförmigen Steinschutz (21) verbreitert.

8. Mähtraktor (100) nach Anspruch 7,
**dadurch gekennzeichnet, dass** die Öffnung (116) der Seitenwand (11) dem hinteren Verbindungsbereich (122) des Basisprofils (12) entspricht, wobei der Steinschutz (21) eine Öffnung (22) aufweist, die der Öffnung (116) der Seitenwand (11) entspricht.

9. Mähtraktor (100) nach einem der vorhergehenden Ansprüche,
**dadurch gekennzeichnet, dass** die obere Wand (15) drei obere Ausbuchtungen (16) aufweist, die im Abstand von 120° voneinander angeordnet sind und sich jeweils über dem linken Hohlraum (30) und dem rechten Hohlraum (40) befinden, wobei jede der drei oberen Ausbuchtungen (16) in radialer Richtung ausgehend von dem Zentrum (111) des Schneidgehäuses (1) angeordnet ist und sich nach außen fortsetzt, wobei die oberen Ausbuchtungen (16) dazu ausgebildet sind, die Struktur des Schneidgehäuses (1) zu verstärken und somit zu verhindern, dass die inneren Oberflächen der Schneidkammer (10) durch eine Kollision mit Hindernissen verformt werden können.

10. Mähtraktor (100) nach einem der vorhergehenden Ansprüche,
**dadurch gekennzeichnet, dass** die untere Wand (18) einen angeflanschten äußeren Rand (181) aufweist, der nach oben angehoben ist und dazu ausgebildet ist, das Gras in eine Bewegungsrichtung des Mähtraktors (100) zu biegen.

## Revendications

1. Tondeuse autoportée (100) comprenant un bâti (101) qui permet de monter un moteur (110) et un boîtier de coupe (1), ledit boîtier de coupe (1) comprend une paroi supérieure (15), une paroi latérale (11) suspendue vers le bas à partir d'une périphérie externe (151) de la paroi supérieure (15) et une chambre de coupe (10) est ouverte vers le bas, comprenant une cavité latérale gauche (30) avec une base circulaire latérale gauche (31) et une cavité latérale droite (40) avec une base circulaire latérale droite (41) communiquant mutuellement entre elles, ladite base circulaire latérale gauche (31) et ladite base circulaire latérale droite (41) définissent un profil de base (12) sur un plan de coupe horizontal des lames de coupe (5), lesdites lames de coupe (5) étant au nombre de deux, chacune desdites deux lames de coupe (5) étant montée, de manière rotative, au moyen d'un moyeu vertical latéral gauche (3) avec la cavité latérale gauche (30) et au moyen d'un moyeu vertical latéral droit (4) avec la cavité latérale droite (40), ledit moyeu vertical latéral gauche (3) définissant un axe vertical latéral gauche (V) et ledit moyeu vertical latéral droit (4) définissant un axe vertical latéral droit (W), l'axe vertical latéral gauche (V) étant agencé dans une position décalée vers une partie avant (102) de la tondeuse autoportée (100) par rapport à l'axe vertical latéral droit (W) agencé dans une position décalée vers une partie arrière (103) de la tondeuse autoportée (100), de sorte qu'une ligne horizontale assemblant le moyeu vertical latéral gauche (3) et le moyeu vertical latéral droit (4) identifie un axe (S) qui forme un angle (α) par rapport à un axe longitudinal (L) de la tondeuse autoportée (100), **caractérisée en ce que** ledit boîtier de coupe (1) est fermé par la paroi supérieure (15), par la paroi latérale (11) et est partiellement fermé vers le bas par une paroi inférieure horizontale (18) disposée sur le plan de coupe horizontal des lames de coupe (5), ladite paroi inférieure (18) s'ouvre vers le bas uniquement en correspondance de la chambre de coupe (10), le profil de base (12) étant horizontal sur le plan de coupe de la chambre de coupe (10) ouverte vers le bas, le profil de base (12) étant tracé par une intersection entre la paroi latérale (11) et la paroi inférieure (18), ledit profil de base (12) de la chambre de coupe (10) est formé comme un huit arrondi avec une partie de raccordement avant (121) dans le sens de la partie avant (102) de la tondeuse autoportée (100) et avec une partie de raccordement arrière (122) dans le sens de la partie arrière (103) de la tondeuse autoportée (100), lesdites parties de raccordement (121, 122) étant telles que le profil de base (12) de la chambre de coupe (10) change progressivement de courbure à partir d'une partie d'une base circulaire latérale gauche (31) jusqu'à une partie d'une base circulaire latérale droite (41), de sorte qu'un écoulement d'air généré par les lames de coupe (5) pendant la rotation est aussi laminaire et régulier que possible à l'intérieur de la chambre de coupe (10), ladite chambre de coupe (10) comprenant une cavité centrale supérieure (20) en intercommunication avec la cavité latérale gauche (30) et la cavité latérale droite (40), ladite cavité centrale supérieure (20) étant appropriée pour permettre un échange d'air entre l'intérieur et l'extérieur de la chambre de coupe (10) par une ouverture (116) de la paroi latérale (11) faisant communiquer l'intérieur de la chambre de coupe (10) avec l'extérieur.

2. Tondeuse autoportée (100) selon la revendication 1, **caractérisée en ce que** chacune desdites lames de coupe (5) est symétrique et plate sur le plan de coupe horizontal, de sorte que l'écoulement d'air a une faible vitesse et a une faible intensité à l'intérieur de la chambre de coupe (10).

3. Tondeuse autoportée (100) selon les revendications 1 ou 2, **caractérisée en ce que** ladite lame de coupe (5) comprend une base de montage (55) de forme rectangulaire plate, sur les deux côtés court de la base de montage (55), on monte des éléments plats en forme de pointe (56) qui se terminent par des extrémités pointues (51), sur les deux côtés de chacun desdits éléments plats en forme de pointe (56), on trouve des lames pointues (52) dans la direction de rotation de la lame de coupe (5) adaptée pour couper l'herbe.

4. Tondeuse autoportée (100) selon l'une quelconque des revendications précédentes, **caractérisée en ce que** ladite partie de raccordement avant (121) est incurvée et ladite partie de raccordement arrière (122) est linéaire, la partie de raccordement avant courbe (121) comprend une partie souple frontale latérale gauche (123) et une partie souple frontale latérale droite (124), la partie souple frontale latérale gauche (123) permet au profil de base (12) de changer progressivement la courbure en passant du fait de suivre la courbure de la partie de la base circulaire latérale gauche (31) au fait de suivre la courbure d'une circonférence virtuelle (125) avec un rayon extérieur à la chambre de coupe (10) et tangent à la fois à la base circulaire latérale gauche (31) et à la base circulaire latérale droite (41), la partie souple frontale latérale droite (124) permet au profil de base (12) de changer progressivement la courbure en passant du fait de suivre la courbure de la partie de la base circulaire latérale droite (41) au fait de suivre la courbure de la circonférence virtuelle (125), la partie de raccordement arrière linéaire (122) comprend une partie souple arrière latérale gauche (127) et une partie souple arrière latérale droite (128), la partie souple arrière latérale gauche (127) permet au profil de base (12) de changer progressivement la courbure en passant du fait de suivre la courbure de la partie de la base circulaire latérale gauche (31) au fait de suivre la partie de raccordement arrière linéaire (122), la partie souple arrière latérale droite (128) permet au profil de base (12) de changer progressivement la courbure en passant du fait de suivre la courbure de la partie de la base circulaire latérale droite (41) au fait de suivre la partie de raccordement arrière linéaire (122).

5. Tondeuse autoportée (100) selon l'une quelconque des revendications précédentes, **caractérisée en ce que** ladite paroi supérieure (15) a un renflement remontant vers le haut par rapport à un niveau de la paroi supérieure (15) qui est au-dessus de la cavité latérale gauche (30) et la cavité latérale droite (40), ledit renflement remontant vers le haut de la paroi supérieure (15) ayant une forme de tunnel (2), ladite cavité centrale supérieure (20) de la chambre de coupe (10) est détectée à partir d'une surface interne dudit tunnel (2), des variations du point de vue de la hauteur de la paroi supérieure (15) et des changements de courbure du tunnel (2) ont lieu d'une manière progressive.

6. Tondeuse autoportée (100) selon la revendication 5, **caractérisée en ce que** ledit tunnel (2) a une surface supérieure (25) qui commence à partir d'un centre de la paroi supérieure (15) et se dirige vers l'extérieur de la chambre de coupe (10), ledit centre de la paroi supérieure (15) correspond à un centre (111) du boîtier de coupe (1) identifié sur le plan de coupe horizontal à un point de tangence entre ladite base circulaire latérale gauche (31) de la cavité latérale gauche (30) et ladite base circulaire latérale droite (411) de la cavité latérale droite (40) de la chambre de coupe (10).

7. Tondeuse autoportée (100) selon la revendication 6, **caractérisée en ce que** ledit tunnel (2) est plat et horizontal et conserve la même hauteur par rapport au plan de coupe horizontal à partir du centre (111) du boîtier de coupe (1) dans la direction de l'axe longitudinal (L) vers la partie arrière (103) de la tondeuse autoportée (100), ledit tunnel (2) s'élargit dans une protection contre le jet de cailloux (21) en forme d'entonnoir.

8. Tondeuse autoportée (100) selon la revendication 7, **caractérisée en ce que** l'ouverture (116) de la paroi latérale (11) correspond à ladite partie de raccordement arrière (122) du profil de base (12), la protection contre le jet de cailloux (21) a une ouverture (22) qui correspond à l'ouverture (116) de la paroi latérale (11).

9. Tondeuse autoportée (100) selon l'une quelconque des revendications précédentes, **caractérisée en ce que** la paroi supérieure (15) comprend trois renflements supérieurs (16) qui sont agencés à 120° entre eux et qui sont respectivement sur chacune parmi ladite cavité latérale gauche (30) et ladite cavité latérale droite (40), chacun desdits trois renflements supérieurs (16) est agencé dans la direction radiale à partir du centre (111) du boîtier de coupe (1) et continuant vers l'extérieur, lesdits renflements supérieurs (16) adaptés pour renforcer la structure du boîtier de coupe (1) évitant les surfaces internes de la chambre de coupe (10) peuvent être déformés par collision avec des obstacles.

10. Tondeuse autoportée (100) selon l'une quelconque des revendications précédentes, **caractérisée en ce que** ladite paroi inférieure (18) comprend une périphérie externe à bride (181) qui est soulevée vers le haut et adaptée pour plier l'herbe dans une direction de déplacement de la tondeuse autoportée (100).
